# EUROPÄISCHE PATENTSCHRIFT

(11) **EP 2 002 125 B1**
(45) Veröffentlichungstag und Bekanntmachung des Hinweises auf die Patenterteilung: **25.01.2017**
(21) Anmeldenummer: 07723748.5
(22) Anmeldetag: 29.03.2007
(51) Int. Cl.: F04D 13/08, F04D 15/02, G01F 23/00, H01H 35/18

(54) **TAUCHPUMPE**
SUBMERSIBLE PUMP
POMPE IMMERGÉE

(30) Priorität: 06.04.2006 DE 102006016982
(43) Veröffentlichungstag der Anmeldung: 17.12.2008
(73) Patentinhaber: Alfred Kärcher GmbH & Co. KG, 71364 Winnenden (DE)
(72) Erfinder: BECK, Bernhard, 70563 Stuttgart (DE); KOPKA, Kerstin, 73650 Winterbach (DE)
(74) Vertreter: Hoeger, Stellrecht & Partner Patentanwälte mbB
(86) Internationale Anmeldenummer: PCT/EP2007/002804
(87) Internationale Veröffentlichungsnummer: WO 2007/112928

(56) Entgegenhaltungen:
- EP-A- 0 992 767
- JP-A- 8 319 983
- JP-A- 2001 041 188
- JP-A- 2006 070 729
- US-A- 2 701 529

## Beschreibung

Die Erfindung betrifft eine Tauchpumpe mit einem Pumpengehäuse, das in eine abzupumpende Flüssigkeit eintauchbar ist und einen Saugeinlass sowie einen Druckauslass aufweist, wobei die Flüssigkeit über den Saugeinlass in das Gehäuse einsaugbar und über den Druckauslass unter Druck ausgebbar ist, und mit einer Steuereinheit, die mit einer an der Außenseite des Gehäuses angeordneten Sensoreinheit gekoppelt ist zum Ein- und Ausschalten der Tauchpumpe in Abhängigkeit vom Pegelstand der die Pumpe umgebenden Flüssigkeit.

Mit Hilfe einer derartigen Tauchpumpe kann Flüssigkeit aus Behältern, Schächten, Räumen in Gebäuden und dergleichen abgepumpt werden. Hierzu umfasst die Tauchpumpe ein Pumpengehäuse, das in die abzupumpende Flüssigkeit eingetaucht werden kann und einen Saugeinlass aufweist, so dass die Flüssigkeit eingesaugt, von der Tauchpumpe unter Druck gesetzt und über den Druckauslass abgegeben werden kann. An den Druckauslass kann eine Druckleitung, beispielsweise ein Druckschlauch, angeschlossen werden.

Außenseitig ist am Pumpengehäuse eine Sensoreinheit angeordnet, die mit einer im Pumpengehäuse angeordneten Steuereinheit gekoppelt ist und mit deren Hilfe die Pumpe in Abhängigkeit vom Pegelstand der sie umgebenden Flüssigkeit ein- und ausgeschaltet werden kann. Es kann beispielsweise vorgesehen sein, dass die Pumpe eingeschaltet wird, nachdem die sie umgebende Flüssigkeit den durch die Lage der Sensoreinheit vorgegebenen Pegelstand erreicht hat, und dass die Tauchpumpe verzögert abgeschaltet wird, wenn sich der Pegelstand unter das Niveau der Sensoreinheit absenkt. Eine derartige Tauchpumpe ist aus der Gebrauchsmusterschrift DE 295 08 802 U1 bekannt. In dieser Druckschrift wird Im Detail eine Sensoreinheit vorgeschlagen, die an einem Tragegriff des Pumpengehäuses befestigt werden kann und mehrere freiliegende Elektroden aufweist, die In unterschiedlicher Höhe an einem L-förmigen Elektrodenträger angeordnet sind. Der Elektrodenträger erstreckt sich in vertikaler Richtung außenseitig am Gehäuse entlang. Über ein Kabel sind die freiliegenden Elektroden mit einer Innerhalb des Gehäuses positionierten Steuereinheit verbunden. Solange die Tauchpumpe nicht in eine elektrlsch leitende Flüssigkeit, zum Beispiel Wasser, eintaucht, sind die freiliegenden Elektroden elektrisch voneinander isoliert. Erreicht der Pegel der Flüssigkeit die am Elektrodenträger ungefähr mittig angeordnete freiliegende Elektrode, so wird die Tauchpumpe eingeschaltet und bleibt in diesem Schaltzustand, bis der Pegelstand die am unteren Ende des Elektrodenträgers angeordnete Elektrode erreicht hat. Mittels der beiden Elektroden kann somit eine Schalthysterese erzeugt werden. Eine am oberen Ende des Elektrodenträgers angeordnete dritte Elektrode dient der Ausgabe eines Alarmsignals, falls der Wasserzustrom in das abzupumpende Behältnis größer ist als die Förderkapazität der Pumpe und demzufolge der Pegelstand bei eingeschalteter Pumpe die obere Elektrode erreicht.

Aus dem Dokument JP 08 319983 A ist eine Tauchpumpe mit den Merkmalen des Oberbegriffs an Patentanspruch 1 bekannt. Bei dieser Tauchpumpe ist außenseitig am Pumpengehäuse ein Sensorteil ortsfest gehalten, das einen Steuerkreis aufweist sowie zwei im Abstand zueinander angeordnete Elektroden, die ebenso wie der Steuerkreis in eine wasserdichte Isolationsschicht eingebettet sind. Das Sensorteil weist außerdem einen Betriebsartenwahlschalter auf mit einem Permanentmagneten, der relativ zu einem Reedschalter verschwenkt werden kann. Durch Verschwenken des Permanentmagneten kann zwischen einer ersten Betriebsart, in der die Tauchpumpe permanent eingeschaltet ist, und einer zweiten Betriebsart, in der ein pegelstandsabhängiger Betrieb vorliegt, gewählt werden.

Aus dem Dokument EP-A-0 992 767 ist eine Sensorhalterung bekannt, mit der ein Sensor in der Höhe verstellbar positioniert werden kann. Die Sensorhalterung kommt in der chemischen Verfahrenstechnik, insbesondere in der Halbleiterindustrie zum Einsatz und kann innenseitig an einem eine Chemikalie aufnehmenden Behälter angeordnet werden.

Der Einsatz einer außenseitig am Gehäuse angeordneten Sensoreinheit hat sich bewährt. Allerdings ist es wünschenswert, eine möglichst kostengünstig herstellbare Tauchpumpe bereitzustellen mit einer konstruktiv einfacheren Sensoreinheit.

Aufgabe der vorliegenden Erfindung Ist es, eine Tauchpumpe der eingangs genannten Art derart weiterzubilden, dass sie kostengünstiger herstellbar ist und eine konstruktiv einfachere Sensoreinheit aufweist.

Diese Aufgabe wird bei einer Tauchpumpe der gattungsgemäßen Art erfindungsgemäß dadurch gelöst, dass die Sensoreineit als höhenverstellbar am Pumpengehäuse gehaltene Baueinheit ausgestaltet ist mit einem Sensorgehäuse, in dem im Abstand zueinander zwei mit Flüssigkeit benetzbare Elektroden angeordnet sind.

Die erfindungsgemäße Tauchpumpe zeichnet sich durch den Einsatz einer als kompakte Baueinheit ausgestalteten Sensoreinheit aus, die In der Höhe verstellbar außenseitig am Gehäuse gehalten ist. Sie umfasst ein Sensorgehäuse, das zwei im Abstand zueinander angeordnete und voneinander elektrisch Isolierte Elektroden aufnimmt, die mit Flüssigkeit benetzbar sind. Die Bereitstellung der beiden Elektroden, die In vertikaler Richtung auf derselben Höhe seitlich nebeneinander angeordnet sind, ermöglicht eine definierte Schalthysterese der Tauchpumpe, indem diese eingeschaltet wird, wenn die beiden Elektroden durch eine elektrisch leitfähige Flüssigkeit, also vorzugsweise durch Wasser, elektrisch miteinander verbunden werden, nachdem die Flüssigkeit einen entsprechenden Pegelstand erreicht hat. Die Tauchpumpe kann anschließend für eine gewisse Nachlaufzeit betrieben werden, die durch ein Zeitglied der Steuereinheit vorgegeben ist. Hierbei kann vorgesehen sein, dass die Nachlaufzeit einstellbar ist.

Die Sensoreinheit kann als Baueinheit vom Benutzer auf einfache Weise in ihrer Höhe verstellt werden, so dass der Benutzer durch entsprechende Lage der Baueinheit vorgeben kann, wann die Tauchpumpe eingeschaltet werden soll.

Die Sensoreinheit zeichnet sich durch eine konstruktiv einfache Konstruktion aus. Sie umfasst zwei im Abstand zueinander angeordnete und voneinander elektrisch isolierte Elektroden, die beispielsweise in Form zweier Metallelektroden ausgebildet sein können, insbesondere in Form zweier Metallplättchen, die parallel zueinander ausgerichtet und jeweils an eine Ader eines mehradrigen Steuerkabels angeschlossen sind. Über das Steuerkabel kann die Sensoreinheit mit der innerhalb des Pumpengehäuses angeordneten Steuereinheit elektrisch gekoppelt werden.

Die erfindungsgemäße Sensoreinheit lässt sich sehr kompakt ausgestalten und erfordert daher nur einen sehr geringen Bauraum. Das Sensorgehäuse kann mit einem Griffelement versehen werden, so dass die Sensoreinheit zur Höhenverstellung vom Benutzer auf einfache Weise ergriffen werden kann. Es kann insbesondere vorgesehen sein, dass die Sensoreinheit außenseitig am Pumpengehäuse ohne Einsatz von zusätzlichem Werkzeug in unterschiedlicher Höhe festgelegt werden kann. Dadurch kann die Handhabung der Tauchpumpe, vereinfacht werden.

Bevorzugt ist außenseitig am Pumpengehäuse eine Sensorhalterung angeordnet, mit der die Sensoreinheit lösbar verbindbar ist, insbesondere kann die Sensoreinheit mit der Sensorhalterung verrastbar sein oder die Sensoreinheit kann in die Sensorhalterung eingeklipst werden.

Besonders günstig ist es, wenn die Sensoreinheit an der Sensorhalterung in der Höhe stufenlos verstellbar gehalten ist. Dies gibt dem Benutzer die Möglichkeit, die Sensoreinheit in beliebiger Höhe außenseitig am Pumpengehäuse festzulegen, wobei durch die Lage der Sensoreinheit der Einschaltpunkt der Tauchpumpe vorgegeben ist.

Es kann beispielsweise vorgesehen sein, dass die Sensorhalterung eine Profilschiene aufweist, an der die Sensoreinheit festklemmbar ist. Die Profilschiene kann zum Beispiel T-förmig oder schwalbenschwanzförmig ausgebildet sein und das Sensorgehäuse kann komplementär zum Profil der Schiene ausgestaltete Klemmelemente aufweisen, die vorzugsweise an beliebiger Stelle des Profils mit diesem verklemmt werden können.

Bei einer bevorzugten Ausführungsform ist die Profilschiene als Führungsschiene ausgestaltet, an der entlang die Sensoreinheit verschiebbar und mit der die Sensoreinheit in beliebiger Höhe verklemmbar ist. Die Führungsschiene kann in das Pumpengehäuse integriert sein. An der Führungsschiene entlang kann die Sensoreinheit verschoben werden. Der Benutzer kann die Sensoreinheit in beliebiger Höhe mit der Führungsschiene verklemmen.

Günstig ist es, wenn die Sensoreinheit zumindest ein federelastisch in eine Klemmstellung vorgespanntes Klemmelement aufweist. Mittels des Klemmelementes kann die Sensoreinheit in beliebiger Höhe an der Profilschiene festgeklemmt werden. Hierzu wird das Klemmelement mit einer Federkraft beaufschlagt. Entgegen der Wirkung der Federkraft kann das Klemmelement vom Benutzer in eine Freigabestellung überführt werden, um die Lage der Sensoreinheit zu verändern.

Vorzugsweise weist die Sensoreinheit ein Klammerteil auf; das das Sensorgehäuse umgreift und an dem das mindestens eine Klemmelement gehalten ist. Hierbei ist es günstig, wenn das Klammerteil auf das Sensorgehäuse aufsteckbar ist. Vorzugsweise übt das Klammerteil auf das Klemmelement eine in dessen Klemmstellung gerichtete Federkraft aus. Am Klammerteil kann ein Griffelement zur Handhabung der Sensoreinheit angeordnet sein.

Es kann vorgesehen sein, dass die Profilschiene mindestens eine Öffnung aufweist zum Einsetzen der Sensoreinheit in die Profilschiene und zum Ablösen der Sensoreinheit von der Profilschiene. Dies gibt dem Benutzer die Möglichkeit, die Sensoreinheit über die Öffnung vollständig von der Profilschiene zu lösen, um die Sensoreinheit an anderer Stelle zu positionieren. Günstig ist es hierbei, wenn die Profilschiene sowohl an ihrem oberen als auch an ihrem unteren Ende eine Öffnung zum Einsetzen und Ablösen der Sensoreinheit aufweist. Zwischen den beiden Öffnungen kann die Sensoreinheit längs der Profilschiene verschiebbar, jedoch untrennbar mit der Profilschiene verbunden sein.

Um die Tauchpumpe in einen Dauerbetrieb zu versetzen, ist es von Vorteil, wenn die Sensoreinheit von der Sensorhalterung vollständig ablösbar und unter Aufrechterhaltung der elektrischen Verbindung zur Steuereinheit auf einer Standfläche der Pumpe ablegbar ist. Dadurch kann mittels der Tauchpumpe so lange Flüssigkeit abgesaugt werden, bis auf der Standfläche lediglich ein dünner Flüssigkeitsfilm zurückbleibt, da ansonsten die Flüssigkeit die beiden Elektroden der auf der Standfläche abgelegten Sensoreinheit elektrisch miteinander verbindet und dadurch den Betrieb der Tauchpumpe aufrechterhält.

Es kann vorgesehen sein, dass ein Verbindungskabel zwischen der Sensoreinheit und der Steuereinheit der Tauchpumpe oberseitig in das Pumpengehäuse eingeführt wird. Hierbei ist es günstig, wenn die Länge des Verbindungskabels die Höhe der Tauchpumpe überschreitet, so dass die Sensoreinheit auf der Standfläche der Pumpe abgelegt werden kann.

Günstig ist es, wenn die Sensoreinheit ein Halteelement umfasst zum Haltern der Sensoreinheit an einer Wandfläche. Dies gibt die Möglichkeit, die Tauchpumpe erst dann einzuschalten, wenn der Pegel der die Pumpe umgebenden Flüssigkeit das Niveau der an einer Wandfläche gehaltenen Sensoreinheit erreicht. Durch den Einsatz des Halteelementes kann somit die Tauchpumpe in Abhängigkeit vom Pegelstand der sie umgebenden Flüssigkeit gesteuert werden, wobei der Pegelstand nicht auf die vertikale Ausdehnung des Pumpengehäuses beschränkt ist.

Das Halteelement kann beispielsweise als Halteöse ausgestaltet sein, die mit dem Sensorgehäuse verbunden ist. Vorzugsweise ist die Halteöse einstückig mit dem Sensorgehäuse verbunden. Letzeres kann beispielsweise als einteiliges oder mehrteiliges Kunststoffformteil ausgebildet sein. Mittels der Halteöse lässt sich die Sensoreinheit auf einfache Weise, insbesondere ohne Einsatz eines zusätzlichen Werkzeuges, an einem Wandhaken befestigen.

Eine besonders einfache konstruktive Ausgestaltung wird bei einer bevorzugten Ausführungsform der Erfindung dadurch erzielt, dass die beiden Elektroden von Kunststoffmaterial umspritzt sind, welches das Sensorgehäuse ausbildet. Die Elektroden können in ein Spritzgusswerkzeug eingesetzt und anschließend mit Kunststoffmaterial umspritzt werden zur Ausbildung des Sensorgehäuses.

Als Elektroden kommen bevorzugt Metallplättchen zum Einsatz. Diese können in einem ersten Fertigungsschritt jeweils mit einer Ader eines mindestens zweiadrigen Verbindungskabels verbunden werden, und anschließend kann diese vormontierte Einheit In ein Spritzgusswerkzeug eingesetzt werden, mit dessen Hilfe die Elektroden mit Kunststoffmaterial umspritzt werden können. Dies ermöglicht eine besonders kostengünstige Herstellung der Sensoreinheit.

Vorzugsweise ist das Pumpengehäuse dreiteilig ausgestaltet und umfasst ein Oberteil, das ein Mittelteil umgreift und mit einem Unterteil lösbar verbindbar ist, wobei die Sensoreinheit an einem sich zumindest entlang des Mittelteils erstreckenden Gehäuseabschnitt höhenverstellbar gehalten ist. Durch die dreiteilige Ausgestaltung des Pumpengehäuses kann dieses auf sehr einfache Weise montiert werden. Es kann beispielsweise vorgesehen sein, dass ein Antriebsmotor in einem ersten Montageschritt In das Mittelteil eingesetzt wird, das anschließend auf das Unterteil aufgesetzt werden kann, welches einen Pumpraum ausbildet und ein vom Motor drehend antreibbares Laufrad aufnimmt. Das Mittelteil kann hierbei einen flüssigkeitsdichten Steuerraum ausbilden, In dem die Steuereinheit positioniert sein kann. In einem weiteren Montageschritt kann das Oberteil mit dem Unterteil verbunden, beispielsweise verschraubt werden, wobei das Oberteil das Mittelteil umgreift. Das Mittelteil kann zwischen das Oberteil und das Unterteil eingespannt werden.

Vorzugsweise ist das Pumpengehäuse in der Draufsicht im Wesentlichen dreieckförmig ausgebildet, wobei die Sensoreinheit an einem Eckbereich des Gehäuses höhenverstellbar gehalten ist. Die Dreieckform des Pumpengehäuses ermöglicht es, dieses besonders kompakt auszugestalten. Es kann einen üblichen zylinderförmigen Antriebsmotor aufnehmen. Das dreieckige Pumpengehäuse umgibt den Antriebsmotor, wobei in den Eckbereichen des Gehäuses Funktionselemente der Tauchpumpe positioniert werden können. So kann beispielsweise vorgesehen sein, dass in einem Eckbereich ein Auslasskanal angeordnet ist, der den Druckauslass definiert und beispielsweise in Form eines Druckstutzens ausgestaltet sein kann. In einem weiteren Eckbereich kann ein Entlüftungsventil positioniert sein, mit dessen Hilfe die Tauchpumpe entlüftet werden kann. Dadurch kann die Förderkapazität der Tauchpumpe erhöht werden, denn über das Entlüftungsventil kann innerhalb der Pumpe befindliche Luft entweichen. Falls sich größere Luftmengen in der Tauchpumpe befinden, ist deren Förderkapazität häufig so gering, dass schon ein geringer Gegendruck am Druckauslass, wie er zum Beispiel durch eine Flüssigkeitssäule in einer an den Druckauslass angeschlossenen Druckleitung oder durch in die Druckleitung eingebaute Rückschlagventile entsteht, nicht mehr überwunden werden kann. Das Entlüftungsventil ist vorzugsweise oberseitig am Pumpengehäuse mit einem Betätigungselement, beispielsweise einem Taster versehen, mit dessen Hilfe das Entlüftungsventil vom Benutzer manuell aus seiner Schließstellung in seine Offenstellung überführt werden kann zum Entlüften der Tauchpumpe.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung einer erfindungsgemäßen Tauchpumpe mit einer Sensoreinheit in einer oberen Stellung;
- Figur 2:: eine perspektivische Darstellung der Sensoreinheit aus Figur 1;
- Figur 3:: eine perspektivische Darstellung der beiden Elektroden der Sensoreinheit;

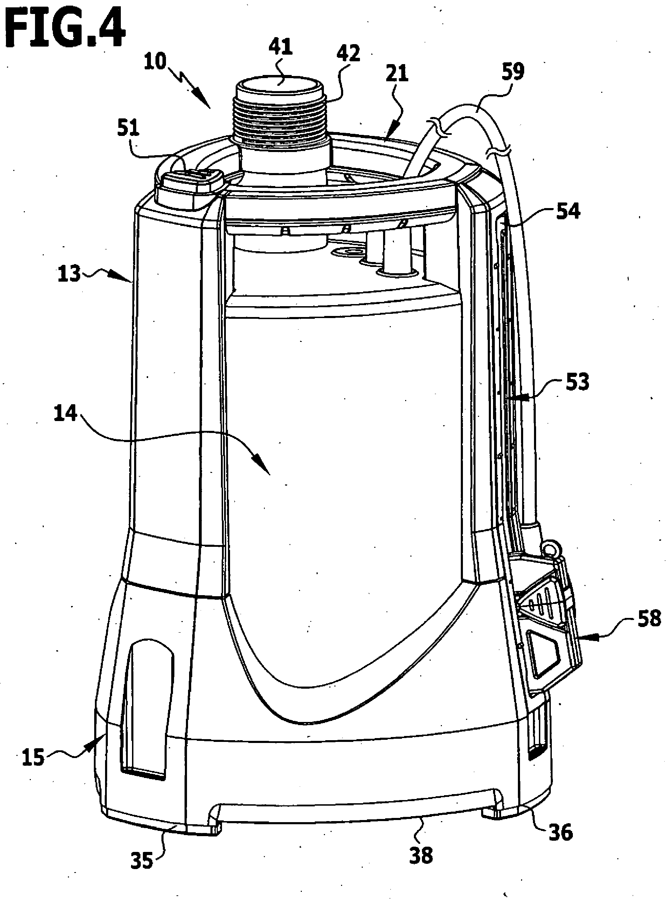

- Figur 4:: eine perspektivische Darstellung der Tauchpumpe mit der Sensoreinheit in einer unteren Stellung;
- Figur 5:: eine perspektivische Darstellung der Tauchpumpe, wobei die Sensoreinheit von einer Sensorhalterung der Tauchpumpe abgetrennt ist und
- Figur 6:: eine perspektivische Darstellung der Tauchpumpe, wobei die Sensoreinheit an einer Wand gehalten ist.

In der Zeichnung ist schematisch eine insgesamt mit dem Bezugszeichen 10 belegte Tauchpumpe dargestellt mit einem Gehäuse 12, das ein Oberteil 13, ein Mittelteil 14 und ein Unterteil 15 umfasst. In der Draufsicht ist das Gehäuse im Wesentlichen dreieckförmig mit konvex nach außen gekrümmten Seiten 17, 18, 19 ausgebildet, und die Eckbereiche des Gehäuses sind im Wesentlichen eben ausgestaltet.

Das Gehäuseoberteil 13 bildet einen Tragring 21 aus, der in der Draufsicht entsprechend dem Gehäuse 12 im Wesentlichen dreieckförmig ausgebildet ist und drei Tragegriffe 22, 23, 24 aufweist. Die Tragegriffe 22, 23 und 24 können vom Benutzer umgriffen werden und erstrecken sich jeweils entlang einer Seite 17, 18 bzw. 19 des Gehäuses 12. Ausgehend von den Eckbereichen des Gehäuses erstrecken sich vom Tragring 21 außenseitig am Mittelteil 14 entlang drei Haltearme in Richtung auf das Unterteil 15, wobei in der Zeichnung nur zwei Haltearme 26, 27 erkennbar sind. Die Haltearme können mit dem Unterteil 15 innenseitig verschraubt werden.

Das Mittelteil 14 des Gehäuses 12 ist im Wesentlichen becherförmig ausgebildet und umfasst eine Deckenwand 29, von der sich eine Außenwand 30 bis zum Unterteil 15 erstreckt. Die Außenwand 30 taucht in das Unterteil 15 hinein und ist mit ihrem freien Endbereich vom Unterteil 15 ringförmig umgeben. Im Abstand zur Außenwand 30 weist das Mittelteil 14 eine Innenwand 31 auf, die ebenfalls mit der Deckenwand 29 einstückig verbunden ist und die eine von der Deckenwand 29 abstehende kreiszylindrische Hülse ausbildet. Im Gegensatz zur Außenwand 30 erstreckt sich die Innenwand 31 in vertikaler Richtung lediglich bis zu einem ungefähr mittigen Bereich des Mittelteils 14.

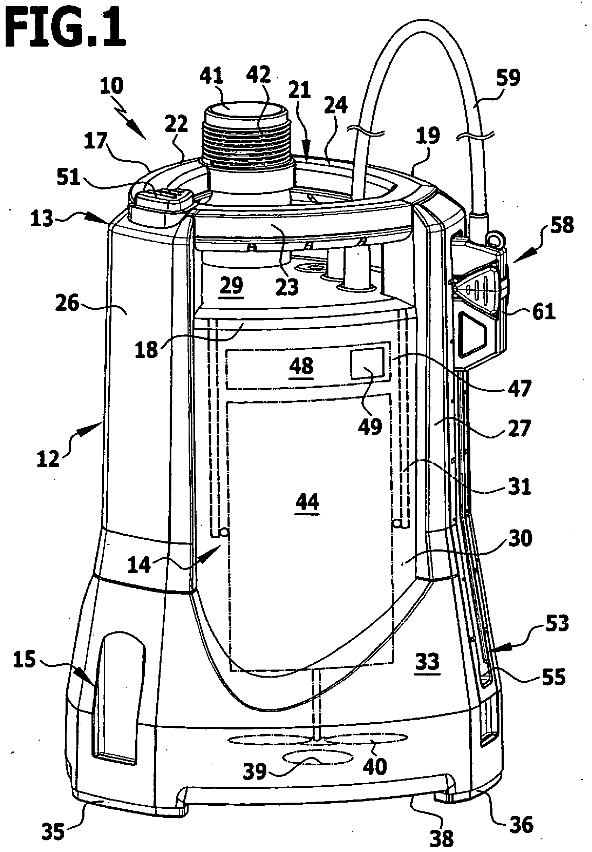

Das Unterteil 15 weist einen Haltering 33 auf, der den unteren Rand des Mittelteils 14 umgibt. Außerdem weist das Unterteil 15 drei jeweils in einem Eckbereich des Gehäuses 12 angeordnete Standfüße auf, von denen in der Zeichnung nur zwei Standfüße 35, 36 erkennbar sind. Mittels der Standfüße kann die Tauchpumpe 10 auf eine in der Zeichnung nicht dargestellte Standfläche aufgestellt werden. Zwischen den Standfüßen bildet das Unterteil 15 jeweils eine Ausnehmung 38 aus, über die eine abzupumpende Flüssigkeit in den Bereich zwischen den Standfüßen eingesaugt werden kann, der über einen bodenseitigen Saugeinlass 39 mit dem Innenraum des Gehäuses 12 in Strömungsverbindung steht. Innerhalb des Gehäuses 12 kann die Flüssigkeit mit Hilfe eines in Figur 1 schematisch dargestellten Laufrades 40 unter Druck gesetzt werden, so dass die Flüssigkeit über einen in einem Eckbereich des Gehäuses 12 angeordneten Druckauslass in Form eines Druckstutzens 41 abgegeben werden kann. An den Druckstutzen 41 kann In üblicher Weise eine Druckleitung, beispielsweise ein Druckschlauch, angeschlossen werden. Hierzu trägt der Druckstutzen 41 ein Außengewinde 42.

Das Laufrad 40 wird von einem Motor 44 in Drehung versetzt, der in den von der kreiszylindrischen Innenwand 31 umgebenen Innenraum eingesetzt ist unter Zwischenlage eines Dichtringes zwischen dem Motor 44 und der Innenwand 31. Oberhalb des Motors 44 definiert die Innenwand 31 einen Steuerraum 47, in dem eine Steuereinheit 48 mit einem Zeitglied 49 angeordnet ist. Der Steuerraum 47 ist flüssigkeitsdicht abgedichtet.

Zwischen der Außenwand 30 und der Innenwand 31 definiert das Gehäuse 12 einen Druckraum, der den Motor 44 In Umfangsrichtung vollständig umgibt und der während des Betriebes der Tauchpumpe 10 mit zu fördernder Flüssigkeit gefüllt ist. Sollte sich im Druckraum Luft befinden, so kann diese über ein in einem Eckbereich des Gehäuses 12 angeordnetes Entlüftungsventil aus dem Druckraum entweichen. Das Entlüftungsventil ist mittels eines Betätigungselementes in Form eines Tasters 51 manuell betätigbar.

In einem weiteren Eckbereich ist außenseitig am Gehäuse 12 eine Sensorhalterung in Form einer Profilschiene 53 angeordnet, die sich entlang des Haltearms 27 und des mit diesem fluchtenden Bereiches des Unterteils 15 erstreckt. Die Profilschiene 53 ist im Querschnitt schwalbenschwanzförmig ausgestaltet und weist an ihrem oberen und an ihrem unteren Ende jeweils eine Öffnung 54 bzw. 55 auf, über die eine Sensoreinheit 58 in die Profilschiene 53 eingesetzt und von dieser vollständig abgetrennt werden kann. Die Sensoreinheit 58 steht über ein Verbindungskabel 59 mit der Steuereinheit 58 in elektrischer Verbindung. Das Verbindungskabel 59 ist flüssigkeitsdicht durch die Deckenwand 29 des Mittelteils 14 hindurch geführt.

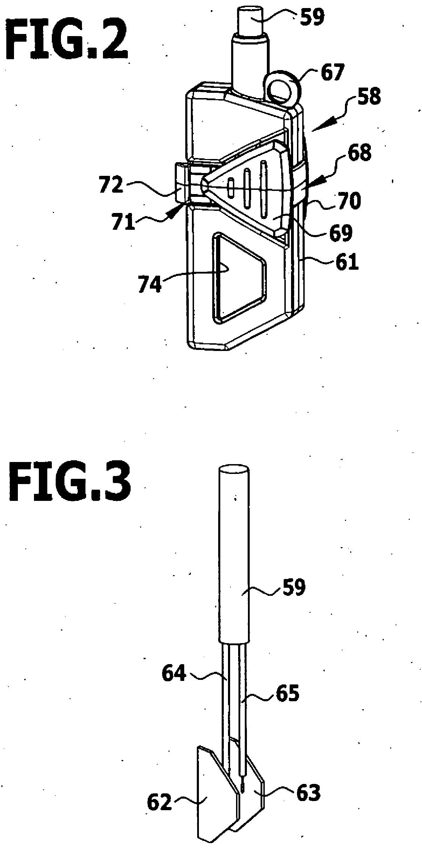

Wie insbesondere aus den Figuren 2 und 3 deutlich wird, umfasst die Sensoreinheit 58 ein Sensorgehäuse 61, das als Kunststoffformteil ausgebildet ist und zwei Elektroden 62, 63 umgibt, die elektrisch voneinander isoliert und im Abstand zueinander angeordnet sind. Die Elektroden 62, 63 sind jeweils an eine Ader 64 bzw. 65 des Verbindungskabels 59 angeschlossen, dessen freier Endbereich vom Sensorgehäuse 61 umgeben ist. Oberseitig bildet das Sensorgehäuse 61 ein Halteelement in Form einer Öse 67 aus. Unterhalb der Öse 67 ist am Sensorgehäuse 61 ein Klammerteil 68 gehalten, das das Sensorgehäuse 61 an drei Seiten umgreift und an zwei einander abgewandten Seiten des Sensorgehäuses 61 jeweils ein Griffelement 69 bzw. 70 ausbildet, an das sich jeweils ein Klemmelement 71 mit einer eine Seite der Profilschiene 53 hintergreifenden Rastnase 72 anschließt. Die Rastnasen 72 werden vom Klammerteil 68 elastisch in die einander abgewandte Richtung vorgespannt, so dass sie auf die Profilschiene 53 eine Klemmkraft ausüben und die in die Profilschiene 53 eingeführte Sensoreinheit 58 in beliebiger Höhe an der Profilscheine 53 festgelegt werden kann.

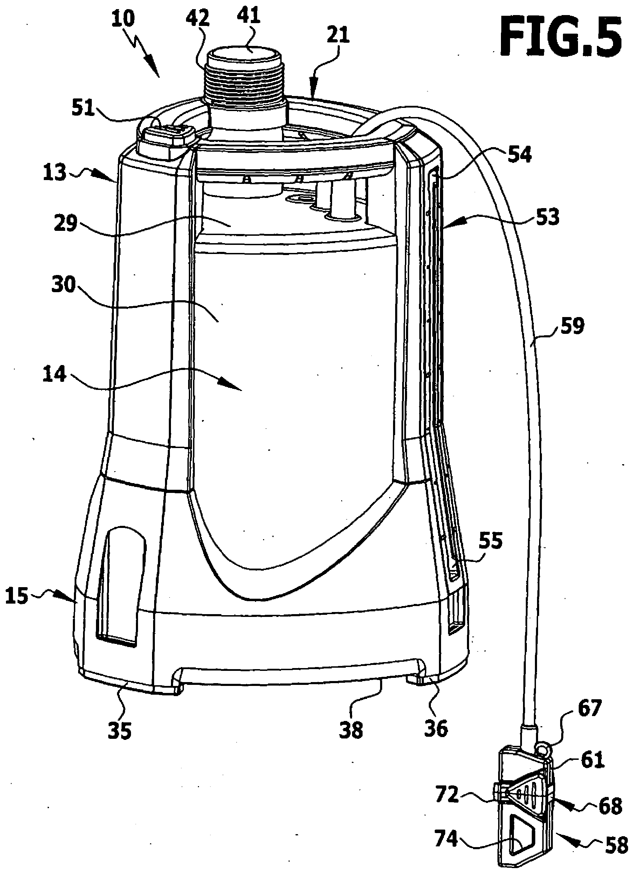

An einander abgewandten Außenseiten weist das Sensorgehäuse 61 jeweils eine Durchbrechung 74 auf, über die die Elektroden 62, 63 mit Flüssigkeit benetzt werden können, wenn die Tauchpumpe 10 in die abzupumpende Flüssigkeit eingesetzt wird und der Pegel der Flüssigkeit die Lage der Sensoreinheit 58 erreicht. Ist dies der Fall, so werden die beiden Elektroden 62, 63 über die elektrisch leitende Flüssigkeit, beispielsweise Wasser, elektrisch miteinander verbunden. Dies wird von der Steuereinheit 48 erkannt, die daraufhin den Motor 44 in Gang setzt, so dass das Laufrad 40 in Drehung versetzt wird und somit Flüssigkeit abgepumpt wird. Nach Ablauf einer durch das Zeitglied 49 vorgegebenen Nachlaufzeit schaltet die Steuereinheit 48 des Motor 44 wieder aus, falls der Flüssigkeitspegel unter das Niveau der Elektroden 62, 63 abfällt. Durch die höhenverstellbar an der Profilschiene 53 gehaltene Sensoreinheit 58 kann der Einschaltpunkt der in die abzupumpende Flüssigkeit eingetauchten Tauchpumpe 10 vorgegeben werden. Die Sensoreinheit 58 kann an der Profilschiene 53 entlang verschoben werden. Hierzu muss der Benutzer lediglich die Griffelemente 69, 70 etwas zusammendrücken, so dass die Klemmelemente 71 mit den Rastnasen 72 aus ihrer Klemmstellung in ihre Freigabestellung übergehen. In dieser Stellung kann die Sensoreinheit 58 an der Profilschiene 53 entlang verschoben werden. Über die oberen und unteren Öffnungen 54, 55 kann die Sensoreinheit 58 vollständig von der Profilschiene 53 entfernt werden. Dies gibt dem Benutzer die Möglichkeit, die Sensoreinheit 58 auf einer Standfläche der Tauchpumpe 10 abzulegen. Diese bleibt dann so lange in Betrieb, bis auf der Standfläche lediglich ein dünner Flüssigkeitsfilm zurückbleibt, da ansonsten die Elektroden 62, 63 von der abzupumpenden Flüssigkeit elektrisch miteinander verbunden bleiben. Um die Sensoreinheit 58 auf der Standfläche ablegen zu können, ist die Länge des Verbindungskabels 59 größer gewählt als die Höhe der Tauchpumpe 10. Dies wird insbesondere aus Figur 5 deutlich.

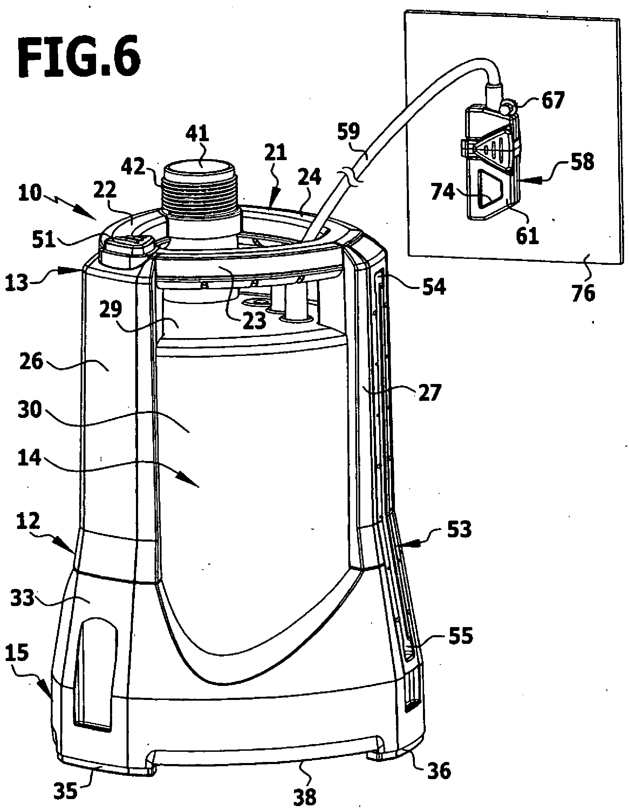

Mittels der Öse 67 kann die Sensoreinheit 58 auch an einer beliebigen Wandfläche 76 festgelegt werden, wie dies schematisch in Figur 6 dargestellt ist. Dadurch erhält der Benutzer die Möglichkeit, den Einschaltpunkt der Tauchpumpe 10 unabhangig von der Höhe des Gehäuses 12 vorzugeben, insbesondere kann die Sensoreinheit 58 mittels der Öse 67 oberhalb der Tauchpumpe 10 an der Wandfläche 76 befestigt werden und die Tauchpumpe 10 wird erst dann mittels der Sensoreinheit 58 und der Steuereinheit 48 in Gang gesetzt, wenn der Flüssigkeitspegel das Niveau der oberhalb der Tauchpumpe 10 angeordneten Sensoreinheit 58 erreicht.

Die Sensoreinheit 58 ist als kompakte Baueinheit ausgestaltet, die vom Benutzer ohne Einsatz eines zusätzlichen Werkzeuges von Hand an der Profilschiene 53 festgeklemmt und bei Bedarf von dieser vollständig abgetrennt werden kann. Die Tauchpumpe 10 zeichnet sich folglich durch eine besonders einfache Handhabung aus.

## Patentansprüche

1. Tauchpumpe mit einem Pumpengehäuse (12), das in eine abzupumpende Flüssigkeit eintauchbar ist und einen Saugeinlass sowie einen Druckauslass aufweist, wobei die Flüssigkeit über den Saugeinlass in das Pumpengehäuse (12) einsaugbar und über den Druckauslass unter Druck ausgebbar ist, und mit einer Steuereinheit (48), die mit einer an der Außenseite des Gehäuses angeordneten Sensoreinheit (58) gekoppelt ist zum Ein- und Ausschalten der Tauchpumpe in Abhängigkeit vom Pegelstand der die Pumpe umgebenden Flüssigkeit **dadurch gekennzeichnet, dass** die Sensoreinheit (58) als höhenverstellbar am Pumpengehäuse (12) gehaltene Baueinheit ausgestaltet ist mit einem Sensorgehäuse (61), in dem im Abstand zueinander zwei mit Flüssigkeit benetzbare Elektroden (62, 63) angeordnet sind.

2. Tauchpumpe nach Anspruch 1, **dadurch gekennzeichnet, dass** außenseitig am Pumpengehäuse (12) eine Sensorhalterung angeordnet ist, mit der die Sensoreinheit (58) lösbar verbindbar ist.

3. Tauchpumpe nach Anspruch 2, **dadurch gekennzeichnet, dass** die Sensoreinheit (58) an der Sensorhalterung in der Höhe stufenlos verstellbar gehalten ist.

4. Tauchpumpe nach Anspruch 2 oder 3, **dadurch gekennzeichnet, dass** die Sensorhalterung eine Profilschiene (53) aufweist, an der die Sensoreinheit (58) festklemmbar ist.

5. Tauchpumpe nach Anspruch 4, **dadurch gekennzeichnet, dass** die Profilschiene (53) als Führungsschiene ausgestaltet ist, an der entlang die Sensoreinheit (58) verschiebbar und mit der die Sensoreinheit (58) in beliebiger Höhe festklemmbar ist.

6. Tauchpumpe nach Anspruch 4 oder 5, **dadurch gekennzeichnet, dass** die Sensoreinheit (58) zumindest ein federelastisch In eine Klemmstellung vorgespanntes Klemmelement (71) aufweist.

7. Tauchpumpe nach Anspruch 6, **dadurch gekennzeichnet, dass** die Sensoreinheit (58) ein Klammerteil (68) aufweist, das das Sensorgehäuse (61) umgreift und an dem das mindestens eine Klemmelement (71) gehalten ist.

8. Tauchpumpe nach einem der Ansprüche 4 bis 7, **dadurch gekennzeichnet, dass** die Profilschiene (53) mindestens eine Öffnung (54, 55) aufweist zum Einsetzen der Sensoreinheit (58) In die Profilschiene (53) und zum Ablösen der Sensoreinheit (58) von der Profilschiene (53).

9. Tauchpumpe nach einem der Ansprüche 2 bis 8, **dadurch gekennzeichnet, dass** die Sensoreinheit (58) von der Sensorhalterung (53) vollständig ablösbar und unter Aufrechterhaltung der elektrischen Verbindung zur Steuereinheit (48) auf einer Standfläche der Tauchpumpe (10) ablegbar ist.

10. Tauchpumpe nach einem der voranstehenden Ansprüche, **dadurch gekennzeichnet, dass** die Sensoreinheit (58) ein Halteelement (67) umfasst zum Haltern der Sensoreinheit (58) an einer Wandfläche (76).

11. Tauchpumpe nach Anspruch 10, **dadurch gekennzeichnet, dass** das Halteelement als Halteöse (67) ausgestaltet ist, die mit dem Sensorgehäuse (61) verbunden Ist.

12. Tauchpumpe nach einem der voranstehenden Ansprüche, **dadurch gekennzeichnet, dass** die beiden Elektroden (62, 63) der Sensoreinheit (58) von Kunststoffmaterial umspritzt sind, welches das Sensorgehäuse (61) ausbildet.

13. Tauchpumpe nach einem der voranstehenden Ansprüche, **dadurch gekennzeichnet, dass** das Pumpengehäuse (12) ein Oberteil (13) aufweist, das ein Mittelteil (14) umgreift und mit einem Unterteil (15) lösbar verbindbar ist, wobei die Sensoreinheit (58) an einem sich zumindest entlang des Mittelteils (14) erstreckenden Gehäuseabschnitt höhenverstellbar gehalten ist.

14. Tauchpumpe nach einem der voranstehenden Ansprüche, **dadurch gekennzeichnet, dass** das Pumpengehäuse (12) in der Draufsicht Im Wesentlichen dreieckförmig ausgestaltet ist, wobei die Sensoreinheit (58) an einem Eckbereich des Gehäuses (12) höhenverstellbar gehalten ist.

## Claims

1. A submersible pump with a pump casing (12) which can be dipped into a liquid which is to be pumped out, and has a suction inlet and a pressure outlet, wherein the liquid can be drawn into the pump casing (12) via the suction inlet and can be discharged under pressure via the pressure outlet, and with a control unit (48) which is coupled with a sensor unit (58) arranged on the outside of the casing for switching on and off the submersible pump dependent on the liquid level of the liquid surrounding the pump, **characterised in that** the sensor unit (58) is configured as a structural unit held vertically adjustably on the pump casing (12) with a sensor housing (61), in which two electrodes (62, 63) which can be wetted with liquid are arranged spaced apart from each other.

2. A submersible pump according to Claim 1, **characterised in that** a sensor holder is arranged externally on the pump casing (12), with which holder the sensor unit (58) can be detachably connected.

3. A submersible pump according to Claim 2, **characterised in that** the sensor unit (58) is held infinitely adjustably in height on the sensor holder.

4. A submersible pump according to Claim 2 or 3, **characterised in that** the sensor holder has a profile rail (53) to which the sensor unit (58) can be securely clamped.

5. A submersible pump according to Claim 4, **characterised in that** the profile rail (53) is configured as a guide rail along which the sensor unit (58) is displaceable and with which the sensor unit (58) can be securely clamped at any height whatsoever.

6. A submersible pump according to Claim 4 or 5, **characterised in that** the sensor unit (58) has at least one clamping element (71) which is pre-tensioned resiliently in a clamping position.

7. A submersible pump according to Claim 6, **characterised in that** the sensor unit (58) has a clamp part (68) which encompasses the sensor housing (61) and on which the at least one clamping element (71) is held.

8. A submersible pump according to one of Claims 4 to 7, **characterised in that** the profile rail (53) has at least one opening (54, 55) for inserting the sensor unit (58) into the profile rail (53) and for detaching the sensor unit (58) from the profile rail (53).

9. A submersible pump according to one of Claims 2 to 8, **characterised in that** the sensor unit (58) is completely detachable from the sensor holder (53) and is able to be laid on a standing surface of the submersible pump (10) while maintaining the electrical connection to the control unit (48).

10. A submersible pump according to one of the preceding claims, **characterised in that** the sensor unit (58) comprises a holding element (67) for holding the sensor unit (58) on a wall surface (76).

11. A submersible pump according to Claim 10, **characterised in that** the holding element is configured as a holding eye (67) which is connected to the sensor housing (61).

12. A submersible pump according to one of the preceding claims, **characterised in that** the two electrodes (62, 63) of the sensor unit (58) are sheathed by plastics material which forms the sensor housing (61).

13. A submersible pump according to one of the preceding claims, **characterised in that** the pump casing (12) has an upper part (13) which encompasses a middle part (14) and can be detachably connected to a lower part (15), the sensor unit (58) being held in vertically adjustable manner on a casing portion extending at least along the middle part (14).

14. A submersible pump according to one of the preceding claims, **characterised in that** the pump casing (12) is configured to be substantially triangular in a top view, the sensor unit (58) being held in vertically adjustable manner on a corner region of the casing (12).

## Revendications

1. Pompe immergée comprenant un boîtier de pompe (12) qui peut être immergé dans un liquide à évacuer à la pompe et qui présente un orifice d'entrée d'aspiration ainsi qu'un orifice de sortie de refoulement, le liquide pouvant être aspiré dans le boîtier de pompe (12) par l'orifice d'entrée d'aspiration et pouvant être délivré sous pression par l'orifice de sortie de refoulement, et comprenant une unité de commande (48) qui est couplée à une unité capteur (58) agencée sur la face extérieure du boîtier et qui est conçue pour mettre en marche et arrêter la pompe immergée en fonction du niveau de liquide autour de la pompe, **caractérisé en ce que** l'unité capteur (58) est réalisée sous la forme d'un module retenu sur le boîtier de pompe (12) de manière réglable en hauteur, et présente un boîtier de capteur (61) dans lequel deux électrodes (62, 63) pouvant être mouillées par du liquide sont agencées à distance l'une de l'autre.

2. Pompe immergée selon la revendication 1, **caractérisée en ce qu'**un élément de retenue de capteur, auquel l'unité capteur (58) peut être reliée de manière détachable, est agencé sur le côté extérieur du boîtier de pompe (12).

3. Pompe immergée selon la revendication 2, **caractérisée en ce que** l'unité capteur (58) est retenue sur l'élément de retenue de capteur de manière à pouvoir être réglée en hauteur en continu.

4. Pompe immergée selon la revendication 2 ou 3, **caractérisée en ce que** l'élément de retenue de capteur comprend un rail profilé (53) sur lequel l'unité capteur (58) peut être bloquée par serrage.

5. Pompe immergée selon la revendication 4, **caractérisée en ce que** le rail profilé (53) est réalisé sous la forme d'un rail de guidage le long duquel l'unité capteur (58) peut être déplacée et avec lequel l'unité capteur (58) peut être bloquée par serrage à une hauteur quelconque.

6. Pompe immergée selon la revendication 4 ou 5, **caractérisée en ce que** l'unité capteur (58) comprend au moins un élément de serrage (71) précontraint de manière élastique dans une position de serrage.

7. Pompe immergée selon la revendication 6, **caractérisée en ce que** l'unité capteur (58) comprend une pièce formant pince (68), qui entoure le boîtier de capteur (61) et sur laquelle l'élément ou les éléments de serrage (71) sont retenus.

8. Pompe immergée selon l'une quelconque des revendications 4 à 7, **caractérisée en ce que** le rail profilé (53) comprend au moins une ouverture (54, 55) permettant l'insertion de l'unité capteur (58) dans le rail profilé (53) et le détachement de l'unité capteur (58) du rail profilé (53).

9. Pompe immergée selon l'une quelconque des revendications 2 à 8, **caractérisée en ce que** l'unité capteur (58) peut être entièrement détachée de l'élément de retenue de capteur (53) et peut être posée sur une surface de pose de la pompe immergée (10) avec maintien de la connexion électrique avec l'unité de commande (48).

10. Pompe immergée selon l'une quelconque des revendications précédentes, **caractérisée en ce que** l'unité capteur (58) comprend un élément de retenue (67) permettant de retenir l'unité capteur (58) sur une surface murale (76).

11. Pompe immergée selon la revendication 10, **caractérisée en ce que** l'élément de retenue est réalisé sous la forme d'un oeillet de retenue (67) qui est relié au boîtier de capteur (61).

12. Pompe immergée selon l'une quelconque des revendications précédentes, **caractérisée en ce que** les deux électrodes (62, 63) de l'unité capteur (58) sont enrobées par extrusion d'une matière plastique, laquelle constitue le boîtier de capteur (61).

13. Pompe immergée selon l'une quelconque des revendications précédentes, **caractérisée en ce que** le boîtier de pompe (12) comprend une partie supérieure (13) qui entoure une partie centrale (14) et peut être reliée de manière détachable à une partie inférieure (15), l'unité capteur (58) étant retenue de manière réglable en hauteur sur une section de boîtier s'étendant au moins le long de la partie centrale (14).

14. Pompe immergée selon l'une quelconque des revendications précédentes, **caractérisée en ce que** le boîtier de pompe (12) présente une conception sensiblement triangulaire en vue en élévation, l'unité capteur (58) étant retenue réglable en hauteur sur une zone de coin du boîtier (12).
